# EUROPÄISCHE PATENTSCHRIFT

(11) **EP 2 737 095 B1**
(45) Veröffentlichungstag und Bekanntmachung des Hinweises auf die Patenterteilung: **24.07.2019**
(21) Anmeldenummer: 12742875.3
(22) Anmeldetag: 26.07.2012
(51) Int. Cl.: C22C 19/00, C22C 38/00, C23D 5/02, B22F 7/04, B22F 1/00, B23K 35/30, B23K 35/02, B32B 15/01, B65D 51/00, C22C 1/04, C22C 19/03, C22C 19/05, C22C 38/18, C23D 7/00, B32B 15/04, B32B 15/18

(54) **VERFAHREN ZUM AUFBRINGEN EINER SCHUTZSCHICHT ZUM SCHUTZ VOR SCHLAGBEANSPRUCHUNGEN**
METHOD FOR APPLYING A PROTECTIVE LAYER FOR PROTECTING AGAINST IMPACT STRESSES
PROCÉDÉ D'APPLICATION D'UNE COUCHE DE PROTECTION POUR PROTÉGER DE CONTRAINTES DUES AUX CHOCS

(30) Priorität: 29.07.2011 DE 102011108808; 18.08.2011 DE 102011110633
(43) Veröffentlichungstag der Anmeldung: 04.06.2014
(73) Patentinhaber: Fachhochschule Münster, 48149 Münster (DE)
(72) Erfinder: PETERSEIM, Jürgen, 48565 Steinfurt (DE); KNUST, Denis, 19055 Schwerin (DE); BEERMANN, Gerald, 48653 Coesfeld (DE)
(74) Vertreter: Braun-Dullaeus Pannen Emmerling Patent- und Rechtsanwaltspartnerschaft mbB
(86) Internationale Anmeldenummer: PCT/EP2012/064701
(87) Internationale Veröffentlichungsnummer: WO 2013/017523

(56) Entgegenhaltungen:
- EP-A1- 2 008 552
- WO-A1-99/00534
- DE-A1-102005 022 264
- DE-A1-102006 050 985
- Peterseim, Jürgen: "Hardpaint", , 30. Oktober 2012 (2012-10-30), Seiten 1-32, XP002686206, Gefunden im Internet: URL:https://www.fh-muenster.de/transfer/do wnloads/Vortrag-Peterseim.pdf [gefunden am 2012-10-30]

## Beschreibung

Die Erfindung betrifft ein Verfahren zum Aufbringen einer Schutzschicht zum Schutz vor Schlagbeanspruchungen, insbesondere zur Erhöhung der Schlagfestigkeit von Werkstücken.

Es sind eine Vielzahl von Möglichkeiten bekannt, durch die Objekte gegenüber Schlagbeanspruchungen, insbesondere vor hochenergetischen und kurzzeitig wirkenden Schlagbeanspruchungen geschützt werden können. Insbesondere soll ein Durchdringen der Schutzschicht oder des Werkstücks durch einen auftreffenden Gegenstand verhindert werden. Dabei muss die kinetische Energie des auftreffenden Gegenstandes aufgenommen werden und möglichst sanft auf das Werkstück abgeleitet oder abgebaut werden. Dabei kommt es nicht zwangsläufig auf die Härte der obersten Oberflächenschichten an; vielmehr ist es entscheidend, dass die kinetische Energie des auftreffenden Gegenstandes spätestens bei Erreichen der tiefsten Bereiche der Schutzschicht ausreichend abgebaut oder auf das Werkstück übertragen ist.

Aus der DE 199 53 259 C2 ist ein Verbund aus mindestens einer Schutzplatte sowie einem Backing aus Metallplatten oder einem Fasergewebe bekannt. Die Schutzplatte weist eine Dicke von mindestens 10 mm auf, was der Anordnung bereits ein sehr hohes Gewicht verschafft. Die hohen Gewichte solcher Schutzplatten werden grundsätzlich als nachteilig angesehen.

Aus der DE 199 56 197 C2 ist ein reaktiver Schutz zum Anbringen an der Außenwandung eines zu schützenden Objekts bekannt. Der Schutz weist mehrere Schichten auf, von denen eine Schicht aus einem Sprengstoff besteht, der bei Auftreffen eines Geschosses detoniert. Der detonierende Sprengstoff erzeugt eine Gegenexplosion gegenüber der Sprengladung von Hohlladungsgeschossen, die die kinetische Energie des Hohlladungsgeschosses zerstreuen soll.

Aus der DE 10 2005 022 264 A1 und der DE 10 2006 050 985 A1 ist eine flüssig auftragbare Einbrennbeschichtung bekannt. Diese ist insbesondere für Maschinenbauteile vorgesehen, die besonders hohen tribologischen Bedingungen ausgesetzt werden und daher einem besonders hohen Verschleiß unterliegen. Das darin beschriebene Verfahren ist besonders geeignet für die Erzeugung einer verschleißbeständigen Beschichtung in Dickschicht mit einer Abtragsreserve. Zur Verwendung von Dünnschichten soll dieses Verfahren nicht geeignet sein. Eine Verwendung zur Verbesserung der Schlagfestigkeit ist nicht beschrieben.

Die EP 2 008 552 A1 beschreibt eine Emaillebeschichtung für Kochtöpfe mit verbesserten Kratzeigenschaften gegenüber einem Glaskeramikkochfeld.

Die WO 99/00534 A1 offenbart ein Verfahren zum Erzeugen einer Hartschicht auf Pressstempeln zur Herstellung von Hohlglas. Neben Druckkräften wirken auf solche Werkzeuge außerdem hohe Reibungskräfte sowie Temperaturwechselbeanspruchungen. Die Hartschicht soll sich verschleißmindernd auf den Pressstempel auswirken, wenn mit dessen Hilfe flüssiges oder zähflüssiges Glas bearbeitet wird.

Hiervon ausgehend ist es Aufgabe der vorliegenden Erfindung ein verbessertes Verfahren zum Aufbringen einer Schutzschicht zum Schutz vor Schlagbeanspruchungen bereitzustellen. Die der Erfindung zugrundeliegende Aufgabe wird gelöst durch ein Verfahren zum Aufbringen einer Schutzschicht zum Schutz vor Schlagbeanspruchungen, umfassend die folgenden Verfahrensschritte: Herstellen einer Schutzschicht, wobei eine Einschmelzlegierung in Pulverform mit einem Bindemittel und mit Wasser zu einer pastösen Masse vermischt wird. Als Bindemittel eignet sich insbesondere eine Emaille, insbesondere bis zu einem Gewichtsanteil von 40%. Bei einer Emaille handelt es sich insbesondere um ein Schmelzgemisch aus Silikaten, Boraten und Fluoriden mit Metallen, insbesondere Natrium, Kalium, Blei oder Aluminium. Details zur Emaille werden in der RAL-RG, 529 A3 definiert. Die pastöse Masse wird dann auf eine zu schützende Oberfläche aufgebraucht. Anschließend wird die pastöse Masse getrocknet, insbesondere bei Raumtemperatur oder bei einer Temperatur bis max. etwa 60°C. Dabei soll weitgehend das Wasser aus der pastösen Masse entfernt werden, so dass insbesondere weniger als 10 Gew-% Wasser in der pastösen Masse verbleibt. Anschließend wird die Schutzschicht auf eine hohe Temperatur erwärmt, nämlich von zumindest 800°C, wobei sich Temperaturen von zumindest etwa 900°C, 950°C oder 1000°C besonders eignen. Eine Temperatur von über 1.300°C ist in der Regel nicht erforderlich.

Es hat sich gezeigt, dass neben einer enormen Härte- und Verschleißfestigkeit eine solche Schicht auch die für eine Schutzschicht zum Schutz vor Schlagbeanspruchungen erforderlichen Eigenschaften bilden kann. Die Schlagfestigkeit wird dabei maßgeblich auch durch die innerhalb der Schutzschicht auftretenden Spannungen beeinflusst, welche wesentlich dazu beitragen, die kinetische Energie des eindringenden Gegenstandes möglichst effektiv abzubauen. Härte allein, welche bei herkömmlichen Schutzschichten häufig durch Keramikeinlagerungen erreicht wird, reicht in der Regel nicht aus, zumal harte Gegenstände häufig der Gefahr von Sprödbruchbildungen ausgesetzt sind und im gebrochenen Zustand einem eindringenden Gegenstand nur vermindert Widerstand entgegensetzen können. Insbesondere zeichnet sich vorliegende Schutzschicht auch durch eine gewisse Nachgiebigkeit oder Verformungsfähigkeit bei mechanischer Belastung aus, so dass kinetische Energie aufgenommen werden kann. Insbesondere die Verwendung einer solchen Schicht zum Zwecke der Verbesserung der Schlagfestigkeit ist daher neu.

Vorzugsweise ist die Einschmelzlegierung aus einer chromhaltigen Nickelbasislegierung gebildet. Daneben können auch weitere Komponenten vorgesehen sein. Als weitere Komponenten eigenen sich insbesondere Bor und/oder Silizium. Diese Komponenten können insbesondere zu einem Gewichtsanteil von maximal etwa 4% vorhanden sein. Ferner kann Eisen vorgesehen sein, insbesondere zu einem Gewichtsanteil von etwa 1%. Versuche haben gezeigt, dass insbesondere das Einbringen eines Eisenanteils in die chromhaltige Nickelbasislegierung die Schlagfestigkeit entscheidend verbessern kann. Alternativ kann die Einschmelzlegierung aus einer Eisenbasislegierung gebildet sein. Es sind die Verwendung weiterer Komponenten möglich. Insbesondere kann ferner Chrom, Bor, Silizium und/oder Kohlenstoff in der Eisenbasislegierung vorgesehen sein. Ein Anteil von Chrom von maximal etwa 25 Gew-% ist vorteilhaft.

Besonders vorteilhaft wird auf die Einschmelzlegierung eine Feststoffschicht aufgebracht, insbesondere eine Metallplatte oder eine Stahlplatte. Auf die Feststoffschicht wird eine weitere Lage der Einschmelzlegierung aufgebracht. Dies erfolgt im Wesentlichen auf die gleiche Art wie oben beschrieben. Hierdurch entsteht ein Lagenpaket aus zumindest zwei Lagen Einschmelzlegierung und zumindest einer Feststoffschicht zwischen den beiden Lagen der Einschmelzlegierung. Es können aber noch weitere Lagen abwechselnd mit einer Feststoffschicht und einer Lage Einschmeizlegierung aufgebracht werden. Hierdurch kann eine Art Verbundwerkstoff gebildet werden. Vorzugsweise wird dabei das Lagenpaket, nämlich alle in diesem Lagenpaket vorhandenen Schichten von Einschmelzlegierung, gemeinsam getrocknet und in einem, insbesondere einem einzigen, Wärmebehandlungsvorgang behandelt. Dieser Wärmebehandlungsvorgang ist derjenige, der oben bereits beschrieben wurde und in den genannten Temperaturbereichen etwa zwischen 800°C und 1300°C betrieben wird.

Erfindungsgemäß wird die Schutzschicht ausschließlich an einer solchen Oberfläche des Werkstücks angebracht, bei der bei bestimmungsgemäßer Benutzung keine tribologischen Einwirkungen auftreten. Vorzugsweise wird die Schutzschicht ausschließlich auf einer Seite eines Werkstücks aufgebracht, nämlich insbesondere der Seite des Werkstoffs, die der Gefahr eines möglichen Einschlages ausgesetzt ist. Im Gegensatz zu einer Verschleißschicht soll die Schutzschicht nicht durch tribologische Einwirkungen nach und nach aufgebraucht werden, sondern vorzugsweise über die gesamte Lebensdauer des Werkstücks bevorzugt in vollem Umfang auf der Oberfläche verbleiben.

In einem bevorzugten Ausführungsbeispiel wird auf einer Stahlunterlage mit einer Dicke im Bereich von einigen Millimetern eine metallische Schicht als Einschmelzlegierung mit einer Dicke im Bereich von weniger als 1 Millimeter bis zu mehreren Millimetern aufgebracht. Die Schicht besteht aus einer chromhaltigen Nickelbasislegierung, die auch Anteile von Bor und gegebenenfalls Silizium bis zu etwa 4 Gew-% enthalten kann. Ferner kann Eisen bis zu 1 Gew-% vorgesehen sein. Alternativ zur chromhaltigen Nickelbasislegierung kann auch eine Eisenbasislegierung insbesondere mit Chrom, Bor, Silizium und Kohlenstoff verwendet werden. Der Chromgehalt kann bis zu 25 Gew-% betragen. Ferner enthält die Schicht bis zu 40 Gew-% einer Emaille,

Die genannten Komponenten der Einschmelzlegierungen werden insbesondere in Pulverform mit Wasser zu einer pastösen Masse gemischt und auf die Stahlunterlage aufgebracht und glatt gestrichen. Der Wasseranteil wird daraufhin durch Trocknen bei Raumtemperatur oder leicht erhöhter Temperatur bis ca. 60°C entfernt. Anschließend erfolgt eine Erwärmung in einem Vakuum- oder Schutzgasofen oder durch ein Induktionsgerät. Die Erwärmung erfolgt in einem Temperaturbereich, in dem die Schicht zähflüssig wird. Die Einschmelzlegierung verteilt sich dann auf der Stahlplatte aufgrund ihres rheologischen Verhaltens gleichmäßig und geht einen festen Verbund mit der Stahlplatte ein. Die erforderliche Temperatur für diesen Wärmebehandlungsvorgang ist legierungsabhängig und liegt insbesondere zwischen 1000°C und 1300°C. Die Einschmeizlegierung wird auf die Seite der Stahlunterlage aufgebracht, die einem möglichen Einschuss ausgesetzt wird.

Es kann die beschriebene Einschmelzlegierung auch in einem mehrlagigen Verbundaufbau verwendet werden. Dabei wechselt sich die Einschmelzlegierung mit Stahlschichten oder andere Feststoffschichten ab. Ein solcher Verbundkörper wird durch abwechselndes Auftragen der Einschmelzlegierung und auflegen einer dünnen Feststoffschichten, insbesondere Stahlplatte, und mehrmaligen Wiederholen dieses Vorgangs hergestellt. Das entstehende Lagenpaket wird anschließend getrocknet und in einem einzelnen Wärmebehandlungsvorgang zu einem festen Lagenpaket fertig behandelt. Der Vorteil dieser Anordnung besteht darin, dass eine oder mehrere der Feststoffschichten, die aus einem vergütbaren Stahl bestehen können in erhöhtem Maße Energie aufnehmen können. Die Einstellung des Vergütungszustandes kann ohne zusätzlichen Aufwand durch eine erhöhte Abkühlgeschwindigkeit aus der Wärmebehandlung erfolgen. Hierbei kann über die chemische Zusammensetzung und die Dicke der einzelnen Feststoffschichten auch ein gewolltes gestuftes Eigenschaftsprofil des Gesamtsystems eingestellt werden, was zu einer gezielten Energieaufnahme der einzelnen Schichtkomponenten führt. So kann beispielsweise eine der Schichten eine vergrößerte Härte aufweisen, während eine andere Schicht mit erhöhter Spannungsbildung versehen sein kann.

Die beschriebene Schutzschicht kann besonders gut die kinetische Aufschlagenergie in Wärme, Verformung und sonstige Reaktionen innerhalb der Schicht umwandeln. Insbesondere kann lokal auftretende Erwärmung zu einem partiellen Anschmelzen des Aufschlagkörpers führen. Je nach Ausgestaltung kann die Gefahr eines Durchbruchs insbesondere gegenüber anderen Schutzschichten gleichen Gewichts verringert werden.

Die neuartige Schutzschicht zeichnet sich dabei insbesondere durch ein sehr geringes Gewicht aus, welches um 40 bis 80 % niedriger als herkömmliche Schutzschichten gegen Schlagbeanspruchung ausgebildet sein kann. Die Schutzschicht kann leicht hergestellt werden und in konventionellen Fertigungsanlagen in verschiedenen Ausführungen herstellbar sein. Die genauen Eigenschaften sind durch die chemische Zusammensetzung und insbesondere auch durch den Schichtaufbau einem jeweiligen Anwendungsfall leicht anpassbar.

Die Schutzschicht eignet sich insbesondere für die Verwendung von Schließkästen zur Erhöhung der Sicherheit des Schließkastens. Ein Schließkasten kann einen Aufnahmeraum für die Lagerung von Gegenständen umfassen. Der Schließkasten ist gegen ein unbefugtes Öffnen durch eine Schließvorrichtung gesichert. Ferner eignet sich eine solche Schutzschicht insbesondere auch für den Schlosskörper eines Schlosses, insbesondere Bügelschlosses oder ähnlichem, in dem die Schließmechanik oder Schließelektrik untergebracht sein kann.

## Patentansprüche

1. Verfahren zum Aufbringen einer Schutzschicht auf eine Stahlunterlage zum Schutz vor hochenergetischen und kurzzeitig wirkenden Schlagbeanspruchungen, umfassend die folgenden Verfahrensschritte:
• Vermischen einer pulverförmigen Einschmelzlegierung mit Wasser zu einer pastösen Masse, wobei die Einschmelzlegierung in Form einer chromhaltigen Nickelbasislegierung mit einem Eisenanteil von etwa 1 Gew. % oder in Form einer Eisenbasislegierung vorliegt und als Bindemittel bis zu 40 Gew. % Emaille enthält,
• Aufbringen und Glattstreichen der pastösen Masse auf der Stahlunterlage,
• Trocknen der pastösen Masse bei einer Temperatur bis zu 60°C,
**dadurch gekennzeichnet,**
**dass** die Stahlunterlage die Form einer Stahlplatte einer Dicke von einigen Millimetern aufweist und
**dass** in einem einzigen Wärmebehandlungsvorgang die Schutzschicht auf eine Temperatur von zumindest 800°C zur gleichmäßigen Verteilung und zum Einschmelzen der Einschmelzlegierung auf der Stahlplatte erwärmt wird.

2. Verfahren nach Anspruch 1, **dadurch gekennzeichnet, dass** die chromhaltige Nickelbasislegierung einen Anteil von Bor und/oder Silizium und/oder Eisen aufweist.

3. Verfahren nach Anspruch 2, **dadurch gekennzeichnet, dass** der Anteil von Bor und Silizium maximal 4 Gew-%, und der Anteil von Eisen maximal 1 Gew-% ausmacht.

4. Verfahren nach Anspruch 1, **dadurch gekennzeichnet, dass** die Eisenbasislegierung einen Anteil von Chrom, Bor, Silizium und/oder Kohlenstoff umfasst, wobei ein Chromanteil von maximal etwa 25 Gew-% vorgesehen ist.

5. Verfahren nach einem der vorherigen Ansprüche, **dadurch gekennzeichnet, dass** auf die Einschmelzlegierung eine weitere dünne Feststoffschicht aufgebracht wird und dass auf die weitere dünne Feststoffschicht eine weitere Lage der Einschmelzlegierung aufgebracht wird, wodurch ein Lagenpaket aus einer Stahlunterlage, einer Einschmelzlegierung, einer dünnen Feststoffschicht und einer weiteren Lagen der Einschmelzlegierung gebildet wird, wobei das Lagenpaket getrocknet und in einem einzelnen Wärmebehandlungsvorgang zu einem festen Lagenpaket fertig behandelt wird.

6. Verfahren nach einem der vorherigen Ansprüche, **dadurch gekennzeichnet, dass** die Schutzschicht ausschließlich auf einer Seite der Stahlunterlage aufgebracht wird.

7. Verfahren nach einem der vorherigen Ansprüche, **dadurch gekennzeichnet, dass** der Vergütungszustand durch eine erhöhte Abkühlgeschwindigkeit aus der Wärmebehandlung erfolgt.

8. Verbundaufbau hergestellt nach einem Verfahren nach einem der vorherigen Ansprüche.

## Claims

1. Method for applying a protective layer to a steel base for protection from high energy and briefly acting impact stresses, comprising the following method steps:
• mixing a sealing alloy in powder form with water to form a pasty mass, wherein the sealing alloy is present in the form of a chromium-containing nickel-based alloy with an iron component of about 1 wt% or in the form of an iron-based alloy and contains up to 40 wt% enamel as binding agent
• applying and smoothing the pasty mass on the steel base;
• drying the pasty mass at a temperature up to 60 °C,
**characterized in that**
the steel base has the form of a steel plate with thickness of a few millimetres, and
the protective layer is heated to a temperature of at least 800 °C for even distribution and for melting the sealing alloy on the steel plate in a single heat treatment process.

2. Method according to Claim 1, **characterized in that** the chromium-containing nickel-based alloy includes a percentage of boron and/or silicon and/or iron.

3. Method according to Claim 2, **characterized in that** the boron and silicon constitutes a fraction of not more than 4 wt% and the iron constitutes a fraction of not more than 1 wt%.

4. Method according to Claim 1, **characterized in that** the iron-based alloy includes a percentage of chromium, boron, silicon and/or carbon, wherein a chromium content not exceeding about 25 wt% is provided.

5. Method according to any one of the preceding claims, **characterized in that** a further thin layer of solid material is applied to the sealing alloy and that a further layer of the sealing alloy is applied on top of the thin layer of solid material, thereby creating a multilayer pack consisting of a steel base, a sealing alloy, a thin layer of solid material, and a further layer of the sealing alloy, wherein the multilayer pack is dried and in a single heat treatment process finished to produce a solid multilayer pack.

6. Method according to any one of the preceding claims, **characterized in that** the protective layer is applied to only one side of the steel base.

7. Method according to any one of the preceding claims, **characterized in that** the tempered condition is produced by an accelerated rate of cooling from the heat treatment.

8. Composite structure produced according to a method according to any one of the preceding claims.

## Revendications

1. Procédé destiné à appliquer une couche protectrice sur un support en acier, pour assurer la protection à effet haute énergie et à court terme contre des sollicitations par choc, comprenant les étapes de procédé suivantes, consistant à :
• mélanger un alliage fusible pulvérulent avec de l'eau, pour obtenir une masse pâteuse, l'alliage fusible se présentant sous la forme d'un alliage à base de nickel contenant du chrome avec une part en fer d'approximativement 1 % en poids ou sous la forme d'un alliage à base de fer et contenant en tant qu'agent liant jusqu'à 40 % en poids d'émaux,
• appliquer et lisser la masse pâteuse sur le support en acier,
• faire sécher la masse pâteuse à une température de jusqu'à 60°C,
**caractérisé en ce que**
le support en acier présente la forme d'une plaque d'acier d'une épaisseur de quelques millimètres et
**en ce qu'**en un unique processus de traitement thermique, on fait chauffer la couche protectrice à une température d'au moins 800 °C, pour assurer une distribution régulière de l'alliage fusible et pour le faire fusionner sur la plaque d'acier.

2. Procédé selon la revendication 1, **caractérisé en ce que** l'alliage à base de nickel contenant du chrome comporte une part de bore et/ou de silicium et/ou de fer.

3. Procédé selon la revendication 2, **caractérisé en ce que** la part de bore et/ou de silicium correspond à un maximum de 4 % en poids et la part en fer à un maximum de 1 % en poids.

4. Procédé selon la revendication 1, **caractérisé en ce que** l'alliage à base de fer comporte une part de chrome, de bore, de silicium et/ou de carbone, une part de chrome d'un maximum de 25 % en poids étant prévue.

5. Procédé selon l'une quelconque des revendications précédentes, **caractérisé en ce qu'**on applique sur l'alliage fusible une mince couche solide supplémentaire et **en ce qu'**on applique sur la mince couche solide supplémentaire une couche supplémentaire de l'alliage fusible, suite à quoi, on créé un paquet de couches constitué d'un support en acier, d'un alliage fusible, d'une mince couche solide et d'une couche supplémentaire de l'alliage fusible, le paquet de couche étant séché et traité en finalité en un unique processus de traitement thermique en un paquet de couches solide.

6. Procédé selon l'une quelconque des revendications précédentes, **caractérisé en ce qu'**on applique la couche protectrice exclusivement sur une face du support en acier.

7. Procédé selon l'une quelconque des revendications précédentes, **caractérisé en ce que** l'état trempé et revenu est atteint par une vitesse de refroidissement accélérée à partir du traitement thermique.

8. Structure composite, fabriquée d'après un procédé selon l'une quelconque des revendications précédentes.
